(19) Europäisches Patentamt
European Patent Office
Office européen des brevets

(11) Numéro de publication : **0 125 519**
**B1**

# (12) FASCICULE DE BREVET EUROPÉEN

(45) Date de publication du fascicule du brevet : **18.06.86**

(21) Numéro de dépôt : **84104338.3**

(22) Date de dépôt : **17.04.84**

(51) Int. Cl.[4] : **C 08 F220/06**, C 02 F 1/54, C 02 F 5/10 // (C08F220/06, 220:06, 222:02)

(54) **Agent hydrosoluble de complexation des cations métalliques composé de terpolymères acryliques disposant d'un haut pouvoir complexant et d'un effet de seuil élevé.**

(30) Priorité : **20.04.83 FR 8306712**

(43) Date de publication de la demande : **21.11.84 Bulletin 84/47**

(45) Mention de la délivrance du brevet : **18.06.86 Bulletin 86/25**

(84) Etats contractants désignés : **DE GB NL**

(56) Documents cités :
**FR-A- 1 441 831**
**FR-A- 1 571 371**
**GB-A- 2 054 548**

(73) Titulaire : **Société COATEX, Société Anonyme**
**35 Cours Aristide Briand**
**F-69300 Caluire (FR)**

(72) Inventeur : **Rousset, Jacky**
**Baneins**
**F-01400 Chatillons-sur-Chalaronne (FR)**
Inventeur : **Ravet, Georges**
**La Guigonnière route de Lyon**
**St. Genis les Ollières F-69390 Crapponne (FR)**

(74) Mandataire : **Eggert, Hans-Gunther, Dr.**
**Räderscheidtstrasse 1**
**D-5000 Köln 41 (DE)**

**EP 0 125 519 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention concerne un agent hydrosoluble de complexation des cations métalliques, composé de terpolymères d'acides acrylique, méthacrylique et itaconique disposant d'un haut pouvoir complexant et d'un effet de seuil élevé.

L'invention concerne également au moins un procédé d'obtention de l'agent hydrosoluble de complexation des cations métalliques.

L'invention concerne aussi les applications particulières de l'agent hydrosoluble de complexation énergique des cations métalliques au traitement de milieux aqueux en contenant et plus particulièrement de ceux utilisés dans des installations industrielles et/ou domestiques en usant du haut pouvoir complexant et de l'effet de seuil élevé.

Depuis longtemps déjà, est apparue à l'homme de l'art la nécessité de traiter les eaux destinées à alimenter des installations industrielles et/ou domestiques ou à être rejetées sous forme d'effluents industriels aqueux.

Dans le cas où les eaux naturelles et/ou milieux aqueux sont destinés à des emplois industriels ou domestiques, ils contiennent en général certains métaux alcalino-terreux, solubilisés sous forme saline, tels que le calcium et le magnésium. Les composés de ces métaux ont la propriété d'être insolubilisés et de se déposer sous forme d'incrustations minérales dès lors que ces eaux naturelles et/ou milieux aqueux sont exploités dans des échangeurs thermiques, tels que les chaudières de production d'eau chaude ou de vapeur d'eau, les échangeurs thermiques de refroidissement, les installations de dessalement de l'eau de mer par distillation, les turbines à vapeur, les pompes et les condenseurs de vapeur, les évaporateurs, les conditionnements d'air.

Il s'est révélé être une nécessité fondamentale d'empêcher ou de réduire à l'extrême la formation d'incrustations minérales sur les surfaces de transferts thermiques des installations industrielles ou domestiques. De telles incrustations sont préjudiciables à la capacité d'échange thermique entre la source et le liquide receveur, restreignent les vitesses d'écoulement du fluide à chauffer ou refroidir, et enfin peuvent atteindre une telle importance qu'elles provoquent dans certaines installations industrielles l'occlusion des faisceaux d'échanges thermiques.

C'est pourquoi l'homme de l'art s'est tourné vers la recherche et l'usage d'adjuvants divers qui auraient la propriété d'inhiber ou au moins de retarder la formation des incrustations minérales par leur introduction dans les eaux et/ou milieux aqueux.

De nombreux adjuvants ont déjà été proposés pour jouer ce rôle d'inhibiteur par leur introduction dans le milieu aqueux à traiter, avant que celui-ci ne subisse une variation volontaire de température. C'est pourquoi la littérature spécialisée cite, en abondance, des compositions inhibitrices d'incrustations et de précipitation, et éventuellement de corrosion, par exemple celles dans lesquelles sont associés les dérivés phosphorés, tels que les polyphosphates et polyphosphonates, avec les acides polycarboxyliques comme l'acide polyacrylique et l'acide polyméthacrylique.

Comme l'exprime le Brevet Français n° 2 116 139, s'il est notoire que les polyphosphates conduisent à la formation d'incrustations tendres et friables qui peuvent être facilement éliminées des surfaces de transferts thermiques, les acides polycarboxyliques ou leurs sels donnent par contre des incrustations dures et adhérentes qu'il est difficile d'éliminer. Bien plus, il est également notoire que dans les procédés de traitement des eaux qui comportent un apport de calories, les polyphosphates sont facilement hydrolysés à chaud, leur action étant ainsi très limitée. C'est pourquoi ledit Brevet Français 2 116 139 propose d'utiliser comme nouvelle composition de substitution inhibitrice d'incrustations minérales, de l'anhydride polymaléique hydrolysé ayant un poids moléculaire compris entre 300 et 5 000. Toutefois, cette nouvelle composition inhibitrice présente des inconvénients qui se manifestent tant au moment de sa production que lors de son application industrielle. En effet, la préparation de cette composition inhibitrice d'incrustations minérales se fait par polymérisation de l'anhydride maléique dans un solvant organique qui est généralement le toluène. Ce solvant, toxique pour l'homme, exige des conditions de sécurité importantes lors de sa mise en œuvre industrielle. Outre ce fait, dès que la polymérisation est achevée, l'anhydride polymaléique obtenu est soumis à une séparation par distillation d'avec le toluène, qui pourrait laisser en son sein des traces de ce solvant.

Malgré ces inconvénients, et dans le but de rendre plus efficace la composition inhibitrice d'incrustations minérales à base d'anhydride polymaléique hydrolysé, un autre brevet, le brevet français n° 2 223 308 propose une composition synergique antitartre comprenant en mélange de l'anhydride polymaléique précité et un acide polyacrylique ou polyméthacrylique, ou encore leurs sels solubles dans le milieu aqueux. Bien que cette composition antitartre améliorée dispose simultanément d'un pouvoir inhibiteur d'incrustations et d'un pouvoir dispersant des tartres et des boues formés, elle est soumise aux mêmes aléas que la composition précitée.

Enfin, d'autres compositions inhibitrices d'incrustations et de précipitations minérales à base de polymères anioniques sont proposées dans l'art antérieur. Ainsi, les brevets américains 3 663 448 et 3 463 730 proposent l'utilisation d'agents polymères ayant un poids moléculaire compris entre 500 et 12 000 dans le but d'empêcher d'abord le dépôt d'incrustations adhérentes sur les surfaces métalliques d'échanges thermiques et ensuite la formation d'un trouble dans l'eau ou le milieu aqueux traité. C'est dans cet esprit que le brevet français 2 415 079 décrit à son tour une composition inhibitrice

d'incrustations et de précipitation, constituée d'un polymère anionique à base d'acrylamide dont le poids moléculaire est compris entre 500 et 12 000, à distribution asymétrique et bimodale, assurant cette double fonction inhibitrice des incrustations et de précipitation. Cette distribution asymétrique des poids moléculaires se compose d'au moins 60 % de polymère dont le poids moléculaire est distribué entre 500 et 2 000, d'au moins 10 % de polymère dont le poids moléculaire est distribué entre 4 000 et 12 000 et d'au plus 30 % de polymère dont le poids moléculaire est distribué entre 2 000 et 4 000. Selon cette composition, la fonction inhibitrice des incrustations est pratiquement assurée par la fraction du polymère anionique dont le poids moléculaire est distribué entre 500 et 2 000 tandis que la fonction inhibitrice de la précipitation est assurée par la fraction du polymère anionique dont le poids moléculaire est distribué entre 4 000 et 12 000.

Or, comme a pu le constater la Demanderesse, lors de nombreuses expérimentations de traitement des eaux et des milieux aqueux au moyen de tels agents mixtes d'inhibition des incrustations et de précipitation, lesdits agents constitués de polymères anioniques offrant une distribution bimodale et asymétrique de leur poids moléculaire, n'apportent pas une efficacité aussi importante que celle qui était escomptée. En d'autres termes, le caractère inhibiteur de précipitation pour la fraction du polymère de poids moléculaire distribué entre 4 000 et 12 000 n'est pas raisonnablement établi puisqu'il n'a pu être expérimentalement confirmé. De même, le caractère inhibiteur des incrustations pour la fraction du polymère de poids moléculaire distribué entre 500 et 2 000 se révèle d'une efficacité insuffisante en raison de l'apparition des dépôts incrustants sur des surfaces de transferts thermiques quelques heures après l'introduction de la composition inhibitrice dans le milieu aqueux à traiter.

Mais la littérature spécialisée cite également d'autres compositions plus complexes inhibitrices d'incrustations et de précipitation et éventuellement de corrosion, susceptibles d'être introduites dans le milieu aqueux à traiter avant qu'il soit soumis à un échange thermique.

Le brevet français n° 2 331 520 revendique comme composition inhibitrice un copolymère hydrosoluble constitué essentiellement de motifs provenant de l'acide acrylique ou de ses dérivés du type :

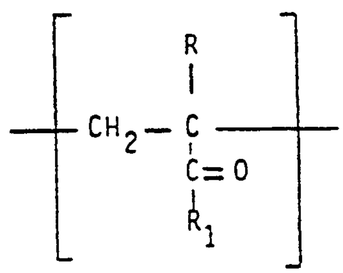

(I)

dans lequel R est de l'hydrogène ou un groupe alkyle inférieur de 1 à 3 atomes de carbone et $R_1$ est un groupe OH, OM ou $NH_2$, M représentant un cation hydrosoluble tel que $NH_4$, K, Na..., et de motifs dérivant d'un acrylate d'alkyle inférieur hydroxylé du type :

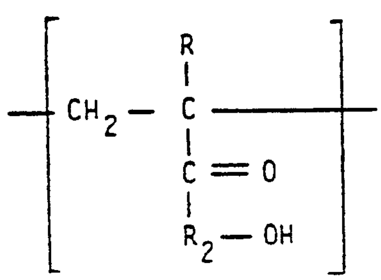

(II)

où R est l'hydrogène ou bien $CH_3$ et $R_2$ est un groupe alkyle inférieur ayant de 2 à 6 atomes de carbone. Le rapport molaire des motifs 1 et 11 peut varier d'environ 34 : 1 à environ 1 : 4, les poids moléculaires du copolymère étant distribués entre 500 et 1 000 000, et de préférence entre 1 000 et 500 000.

Toutefois, l'efficacité de ce copolymère permet seulement de limiter la formation et le dépôt des incrustations de silicates et phosphates de calcium et magnésium ainsi que le dépôt des matières en suspension telles que l'oxyde de fer, l'argile...

Le brevet français 2 486 949 propose un agent complexant inhibiteur d'incrustations minérales de composition très particulière qui consiste en un terpolymère d'acrylamide ou méthacrylamide avec l'acide acrylique ou méthacrylique et un autre monomère copolymérisable, l'acide 2-acrylamido-2-méthylpropane sulfonique, sous la forme de sels alcalins ou d'ammonium. Ce terpolymère susceptible d'inhiber la formation d'incrustations et de diminuer la corrosion des installations industrielles, dispose d'une masse moléculaire comprise entre 500 et 20 000, répartie indifféremment d'une manière symétrique ou asymétrique avec plusieurs maxima. Mais il semble exiger la mise en œuvre de quantités très importantes pour disposer d'une efficacité suffisante, en particulier à l'égard de l'action inhibitrice de corrosion.

Dans le cas où les eaux et/ou milieux aqueux sont des effluents résiduaires de procédés industriels tels que ceux par exemple résultant des traitements d'électrophorèse ou de galvanoplastie, il apparaît fondamental de recueillir les métaux lourds ainsi que les autres ions métalliques, sources importantes de pollution, par des procédés de séparation physique et de concentration tels que l'ultrafiltration, grâce à l'emploi de membranes semi-perméables. Or ces procédés, parfaitement adaptés aux molécules de grandes dimensions, exigent pour le traitement de solutions contenant des cations métalliques que la taille de ces cations soit artificiellement augmentée par complexation au moyen de macromolécules. Un tel moyen est décrit dans la revue « Informations chimie » n° 204-205, pages 145 à 152 (août-septembre 1982) de F. Aulas, M. Rumeau, M. Renaud et B. Tyburce.

Si, dans certaines conditions, des métaux comme l'étain, le plomb ou l'aluminium peuvent se polymériser en donnant des complexes de tailles relativement grande compatible avec l'usage de membrane semi-perméable, les conditions d'obtention de ces polymères sont très difficiles à réunir.

Par contre, l'utilisation de macromolécules telles que les polyélectrolytes anioniques employés comme adjuvants de floculation et en particulier les polymères du type polyacrylamide est recommandée, car pouvant donner avec les cations métalliques des complexes stables. Toutefois, ces complexants hydrosolubles doivent disposer de qualités fondamentales bien difficiles à réunir puisqu'ils doivent posséder simultanément une masse moléculaire de l'ordre de 70 000, être hydrosolubles, disposer d'un pouvoir complexant suffisant pour former des complexes stables dans le temps, mais également bénéficier d'un taux de complexation élevé pour éviter une forte concentration en polymère dans la solution aqueuse à traiter.

Aussi l'art antérieur propose des complexants hydrosolubles d'ions qui ne sont pas pleinement satisfaisants. Car, introduits au sein du milieu à traiter, ils n'apportent pas suffisamment l'efficacité souhaitée et ne font que retarder les phénomènes qu'ils devraient combattre, comme les incrustations minérales sur les surfaces de transfert thermique avec, comme conséquence inéluctable, une diminution progressive mais rapide du coefficient d'échange thermique, ou encore une séparation physique sur membrane semi-perméable coûteuse et difficile.

Devant la nécessité économique et l'exigence technique de traiter des eaux et les milieux aqueux destinés à des installations industrielles et/ou domestiques, ou rejetés par elles après usage, la demanderesse poursuivant ses recherches a trouvé et mis au point un agent hydrosoluble de complexion disposant d'un pouvoir complexant élevé à l'égard des cations métalliques.

Selon l'invention, l'agent hydrosoluble de complexation disposant d'un pouvoir complexant élevé à l'égard des cations métalliques, constitué de copolymère acrylique, se caractérise en ce qu'il est formé de terpolymères comprenant des motifs acryliques et méthacryliques et itaconiques, de formule générale :

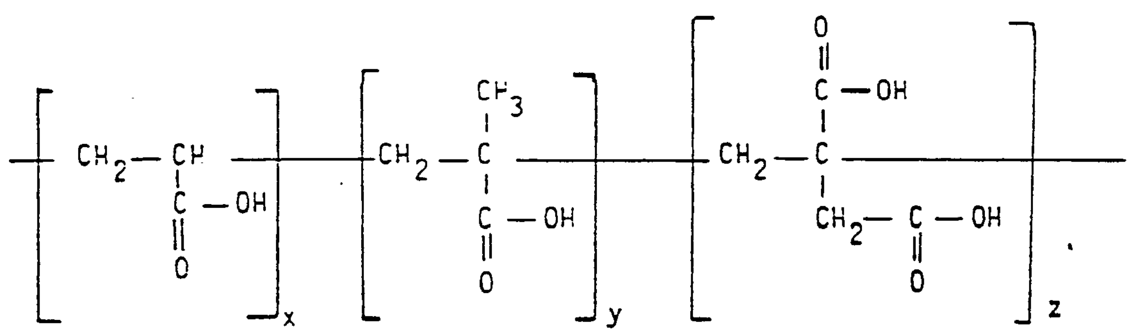

dans laquelle les indices, exprimés en pourcent en poids, ont au moins une valeur de 10 pour x et y et une valeur de 5 pour z.

Les terpolymères selon l'invention contiennent en général et exprimés en pourcent en poids, de 20 à 60 % mais de préférence de 30 à 50 % d'acide acrylique, de 20 à 60 % mais de préférence de 30 à 50 % d'acide méthacrylique et 5 à 40 % mais de préférence de 10 à 30 % en poids d'acide itaconique.

Ces terpolymères acryliques sont préparés selon les procédés connus par copolymérisation radicalaire des acides acrylique, méthacrylique et itaconique en présence de régulateurs de polymérisation tels que par exemple des composés organiques à base d'hydroxylamine, et en présence d'initiateurs de polymérisation tels que les peroxydes et les persels, par exemple l'eau oxygénée ou le persulfate, puis en opérant éventuellement une neutralisation complète ou partielle du polymérisat.

Dès la fin de la polymérisation, la solution aqueuse du polymérisat obtenu peut être utilisée telle quelle sous forme acide ou être neutralisée partiellement ou en totalité par au moins un agent approprié de neutralisation disposant d'une fonction monovalente ou d'une fonction polyvalente.

L'agent de neutralisation disposant d'une fonction monovalente, est choisi dans le groupe constitué par les cations alcalins, en particulier le sodium et le potassium, ou encore l'ammonium, ou bien les amines primaires, secondaires ou tertiaires alyphatiques et/ou cycliques telles que par exemple les éthanolamines (mono, di, tri-éthanolamine), la mono et diéthylamine, la cyclohexylamine, la méthylcyclohexylamine.

L'agent de neutralisation disposant d'une fonction polyvalente est, quant à lui, choisi dans le groupe

constitué par les cations divalents alcalino-terreux, en particulier le magnésium et le calcium, ou encore le zinc, de même que par les cations trivalents, dont en particulier l'aluminium, ou encore par certains cations de valence plus élevée ainsi que des polyamines, aliphatiques et/ou cycliques telles que par exemple l'éthylènediamine, la diéthylènetriamine.

La neutralisation des sites acides des terpolymères peut être obtenue par des combinaisons possibles entre au moins un agent de neutralisation disposant d'une fonction monovalente et au moins un agent de neutralisation disposant d'une fonction polyvalente.

Mais la solution aqueuse du polymérisat peut également être traitée par tout moyen connu de l'homme de l'art pour en éliminer la phase liquide et isoler les copolymères acryliques sous la forme d'une fine poudre qui peut être utilisée sous cet autre aspect comme agent de traitement des milieux aqueux.

L'agent hydrosoluble de complexation selon l'invention est formé des terpolymères carboxyliques précités dont les poids moléculaires sont distribués entre 500 et 100 000.

Selon les applications auxquelles est destiné l'agent hydrosoluble de complexation selon l'invention, le poids moléculaire moyen peut se trouver dans le domaine compris entre 700 et 50 000.

Quand l'agent hydrosoluble de complexation est mis en œuvre dans le traitement des eaux industrielles et/ou domestiques dans le but de conférer à ces milieux des effets antitartres et anticorrosion par exemple, le poids moléculaire moyen peut être choisi préférentiellement dans le domaine compris entre 700 et 1 500.

Quand l'échangeur d'ions est mis en œuvre dans le domaine de l'osmose inverse et de l'ultrafiltration dans le but de complexer les cations présents, d'augmenter leur volume hydrodynamique et de réaliser ainsi des solutions concentrées en cations, le poids moléculaire moyen doit être choisi en fonction de la porosité de la membrane utilisée. Ce poids moléculaire moyen est, pour ce type de traitement, généralement choisi dans le domaine compris entre 1 000 et 50 000 et préférentiellement dans le domaine compris entre 2 000 et 50 000.

La détermination du poids moléculaire des terpolymères d'acides acrylique et méthacrylique et itaconique, selon l'invention, se fait selon la méthode GPC, dite de perméation sur gel, bien connue de l'homme de l'art, en milieu solvant tel que le tétrahydrofurane ou en milieu aqueux.

Mais cette détermination peut également se faire au moyen de la mesure de la viscosité spécifique desdits terpolymères. Dans ce dernier cas, la demanderesse a pu établir que la fraction des terpolymères carboxyliques qui possède les qualités fondamentales d'un agent hydrosoluble de complexation est celle dont la viscosité spécifique est comprise entre 0,25 et 10.

La viscosité spécifique des terpolymères qui est symbolisée par la lettre « $\eta$ » est déterminée de la manière suivante :

On prépare une solution de terpolymère sous forme de sel sodique, par dissolution de 50 g sec du terpolymère dans un litre d'une solution d'eau distillée contenant 60 g de chlorure de sodium. Puis on mesure, avec un viscosimètre capillaire placé dans un bain thermostaté à 25 °C, le temps d'écoulement d'un volume donné de la solution précitée contenant le terpolymère acrylique alcalin, ainsi que le temps d'écoulement du même volume de solution aqueuse de chlorure de sodium dépourvue dudit terpolymère. Il est alors possible de définir la viscosité spécifique « $\eta$ » grâce à la relation suivante :

$$\eta = \frac{\text{(temps d'écoulement de la solution de polymère)} - \text{(temps d'écoulement de la solution NaCl)}}{\text{(temps d'écoulement de la solution NaCl)}}$$

Le tube capillaire est généralement choisi de telle manière que le temps d'écoulement de la solution de NaCl, dépourvue de terpolymère soit d'environ 90 à 100 secondes, donnant ainsi des mesures de viscosité spécifique d'une très bonne précision.

Enfin, l'agent hydrosoluble de complexation, quand il joue un rôle d'agent inhibiteur de la formation d'incrustations et de la précipitation des éléments alcalino-terreux en solution, destiné au traitement des milieux aqueux en contact avec des surfaces de transferts thermiques, est introduit dans lesdits milieux à raison de 1 à 100 ppm et de préférence de 2 à 10 ppm. Tandis que lorsque ledit copolymère joue le rôle d'agent complexant des cations à concentrer par osmose inverse ou ultrafiltration, il est introduit dans lesdits milieux à raison d'au moins la quantité stœchiométrique nécessaire à la complexation.

La portée et l'intérêt de l'invention seront mieux perçus grâce aux exemples suivants :

## Exemple 1

Cet exemple illustre un mode de préparation de l'agent hydrosoluble de complexation selon l'invention.

Pour ce faire, on a placé dans un autoclave les ingrédients suivants :

| | |
|---|---|
| eau | 243,50 kg |
| acétate de cuivre | 1,04 kg |
| acide acrylique à 90 % | 1,22 kg |
| isopropanol | 162,30 kg |

Ces ingrédients étaient chauffés à la température de 90 °C.

Puis on a ajouté en un temps de 3 heures environ et en maintenant la température à 90 °C, une charge constituée par :

| | |
|---|---|
| eau | 270,60 kg |
| acide acrylique à 90 % | 241,00 kg |
| acide méthacrylique à 100 % | 193,50 kg |
| acide itaconique | 72,40 kg |
| sulfate d'hydroxylamine | 3,38 kg |

En même temps que la charge, on a également introduit un catalyseur de polymérisation constitué par :

| | |
|---|---|
| eau | 27,70 kg |
| eau oxygénée à 130 volumes | 121,70 kg |

Au terme de l'addition de la charge et du catalyseur, on a distillé à la température de 100 °C l'isopropanol jusqu'à sa complète élimination.

A la fin de la distillation, on a ajouté lentement 7,44 kg d'hydrate d'hydrazine à 24 % pour détruire l'excès d'eau oxygénée.

Enfin, après avoir refroidi le milieu résultant à la température de 20 °C, on a ajusté la solution contenant le terpolymère jusqu'à une concentration finale de 50 % en poids de matière sèche.

Le terpolymère obtenu contenait en pourcent en poids :

| | |
|---|---|
| acide acrylique | 44,93 % |
| acide méthacrylique | 40,08 % |
| acide itaconique | 14,99 % |

Son poids moléculaire moyen était d'environ 900 tandis que le pH de la solution le contenant était de 2,5.

## Exemple 2

Dans cet exemple, la demanderesse a voulu mettre en évidence les propriétés complexantes particulièrement avantageuses du terpolymère selon l'invention par comparaison avec des polymères acryliques appartenant à l'art antérieur.

Pour ce faire, la demanderesse a utilisé une méthode polarographique classique, technique électrochimique courante, à balayage de potentiel qui consistait à tracer les courbes « Intensités de courant » en milli Ampères par rapport à la « tension » en millivolts lors de la réduction d'un cation tel que $Zn^{2-}$, $Cr^{3-}$ ou $UO_2^{2+}$, complexé ou non au niveau d'une cathode constituée par une goutte de mercure tombante.

Ces courbes en forme de « S », dont la hauteur est proportionnelle à la concentration en cations, ont un point d'inflexion appelé « potentiel de demi-vague » (noté $E_{1/2}$) caractéristique dudit cation réduit. Lorsque le cation est complexé, ce potentiel caractéristique apparaît bien différent de celui obtenu en présence du cation seul, l'écart de potentiel de demi-vague ($\Delta E_{1/2}$) étant d'autant plus important que le complexe formé se révèle plus fort.

Ainsi, les potentiels de demi-vague ont été mesurés avec le seul cation à étudier, puis avec ledit même cation en présence des agents complexants dont les propriétés étaient à révéler à l'égard du cation considéré. Les résultats numériques, exprimés en millivolts, mesuraient l'écart de potentiel de demi-vague ($\Delta E_{1/2}$) entre le cation seul et le cation en présence de l'agent complexant.

Le matériel utilisé pour mesurer les potentiels de demi-vague était un polarographe TACUSSEL PRT 3001 muni d'une cellule de travail TACUSSEL RM 0,5 et de trois électrodes, la première étant une électrode capillaire à goutte de mercure TACUSSEL CMR de longueur 10 cm et de diamètre 5 à 7 µm dont la période de chute de la goutte de mercure est d'une seconde, la deuxième étant une électrode de référence saturée en calomel et la troisième étant une contre-électrode au platine noyé dans une nappe de mercure.

Les polarographies ont été effectuées sous atmosphère d'azote après balayage d'azote dans la solution.

La solution soumise à l'électrolyse avait la composition suivante pour 100 millilitres :

| | |
|---|---|
| solution contenant $10^{-2}$ mole/l du cation à étudier : | 1 ml |
| solution contenant 1 mole/l de KCl : | 10 ml |
| solution contenant 1 g/l de gélatine (Prolabo code 24343) : | 10 ml |
| agent complexant sec constitué par le polymère : | 2,5 g |

Le pH de la solution précitée était ajusté à la valeur de 4 au moyen d'une solution aqueuse contenant $10^{-2}$ mole/l d'acide chlorhydrique avant que le volume soit exactement amené au volume final de 100 millilitres au moyen d'eau distillée.

Le premier essai (Essai n° 1) concerne un essai témoin ne comportant aucun polymère.

Le deuxième essai (Essai n° 2) concerne le terpolymère selon l'invention dont un mode de préparation a été décrit dans l'exemple 1.

Le troisième essai (Essai n° 3) concerne un acide polyacrylique de poids moléculaire moyen 1 500 appartenant à l'art antérieur.

Le quatrième essai (Essai n° 4) s'intéresse à l'usage d'un autre acide polyacrylique appartenant également à l'art antérieur, de poids moléculaire moyen 800, proche de celui du terpolymère selon l'invention.

Les pouvoirs complexants de ces polymères ont été étudiés à l'égard des trois cations $Zn^{2+}$, $Cr^{3+}$ et $UO_2^{2+}$ et les résultats des mesures polarographiques ont été consignés dans le tableau 1 ci-après :

Tableau 1

| | | Ecart de potentiel de demi-vague ($\Delta E_{1/2}$) en millivolt pour le cation : | | |
|---|---|---|---|---|
| | | $Zn^{2+}$ | $Cr^{3+}$ | $UO_2^{2+}$ |
| Essai 1 | Absence de polymère | 0 | 0 | 0 |
| Essai 2 | terpolymère selon l'invention | 140 | 210 | 275 |
| Essai 3 | acide polyacrylique poids moléculaire moyen : 1 500 | 20 | 80 | 35 |
| Essai 4 | acide polyacrylique poids moléculaire moyen : 800 | 45 | 110 | 45 |

Ainsi, comme le révèle ce tableau, le terpolymère selon l'invention offre un haut pouvoir complexant des cations et ce, par rapport aux polymères acryliques bien connus dans l'art antérieur.

Exemple 3

Cet exemple a pour but d'illustrer l'ensemble des expériences réalisées par la demanderesse, pour mettre en évidence la compatibilité du terpolymère selon l'invention avec les sels de zinc.

En effet, dans le traitement des eaux, il est connu d'associer en solution aqueuse un polymère acrylique (sous forme d'acide polyacrylique) avec un sel de zinc en vue de lutter simultanément contre les dépôts incrustants et la corrosion des installations industrielles.

Or il est souhaitable qu'une telle solution aqueuse soit simultanément très concentrée et stable de telle manière qu'elle puisse être facilement injectée par pompe doseuse dans les circuits industriels à traiter.

Pour ce faire, des mélanges contenant polymère acrylique et sel de zinc ont été réalisés à des concentrations élevées, exprimées en pourcent en poids :

| | |
|---|---|
| polymère carboxylique sec sous forme acide | 25 % |
| eau | 25 % |
| chlorure de zinc à 73 % | 50 % |

L'essai n° 5 concerne l'usage d'un acide polyacrylique de poids moléculaire moyen égal à 1 200 appartenant à l'art antérieur.

L'essai n° 6 concerne l'usage du terpolymère selon l'invention de poids moléculaire moyen égal à 900, provenant de l'exemple 1.

Après un temps de stockage de 24 heures à 20 °C, le mélange selon l'essai n° 5 était fortement gélifié, révélant ainsi que l'usage d'un polymère selon l'art antérieur était, à haute concentration, incompatible avec la présence d'un composé du zinc.

Par contre, après un temps de stockage de un mois à 20 °C, le mélange selon l'essai n° 6 était liquide et limpide, manifestant ainsi l'excellente compatibilité à haute concentration du terpolymère selon l'invention avec un composé du zinc.

Exemple 4

Cet exemple a pour but d'illustrer l'ensemble des expériences réalisées en statique par la demanderesse dans le but de retarder la précipitation des ions alcalino-terreux présents dans les eaux naturelles non salines.

Les essais réalisés à cette intention l'ont été par comparaison avec des agents de traitement des eaux, appartenant à l'art antérieur, ayant tous la réputation d'être des inhibiteurs d'incrustations et de précipitation et constituant l'environnement le plus proche du terpolymère, agent de traitement selon l'invention.

Les essais 7 et 8 concernent l'art antérieur tandis que l'essai 9 illustre l'objet de l'invention.

L'essai 7 fait usage d'un acide polyacrylique de poids moléculaire moyen égal à 1 500, agent de traitement des eaux bien connu.

L'essai n° 8 s'intéresse à l'usage d'un autre agent de traitement des eaux, également bien connu et constitué par un acide polyacrylique de poids moléculaire moyen égal à 800.

L'essai n° 9 concerne le terpolymère selon l'invention de poids moléculaire moyen égal à 1 000, préparé selon un procédé similaire à celui décrit dans l'exemple 1.

Pour chacun de ces essais, la demanderesse a utilisé de l'eau industrielle de même origine dont la teneur en sels alcalino-terreux et plus particulièrement en calcium était mesurée par formation des complexes des ions $Ca^{++}$ + $Mg^{++}$, au moyen d'une solution titrée de sel disodique de l'acide éthylène diamine tétraacétique, en milieu tamponné à pH 10, en donnant la valeur d'une dureté en degré français TH (norme AFNOR NF-T 90 003). Chaque essai a été réalisé selon le même mode opératoire qui comportait les étapes suivantes :

D'abord, introduction de 4 ppm (partie par million) de l'agent de traitement dans l'eau industrielle à traiter.

Puis, mise en place dans un ballon de 1 litre surmonté d'un réfrigérant, de 250 millilitres de l'eau à traiter comportant l'agent. Ensuite, ébullition de cette eau en présence de son agent, au moyen d'un chauffe ballon dont le thermostat est réglé de manière que ladite ébullition soit atteinte en trois minutes et qu'elle soit maintenue pendant 30 minutes.

Après le temps d'ébullition, refroidissement des 250 millilitres d'eau jusqu'à 25 °C, puis filtration sur papier sans cendres pour éliminer le précipité formé lors de l'ébullition.

Enfin, le filtrat obtenu est soumis à une nouvelle mesure de dureté exprimée en degré français TH. Cette valeur constitue le TH final, mesuré après ébullition en présence de l'agent de traitement.

Pour mesurer l'efficacité de l'agent de traitement des eaux, qu'il appartienne à l'art antérieur ou qu'il émane de l'invention, la demanderesse a tout d'abord effectué la mesure de la dureté de l'eau industrielle avant qu'elle soit soumise à un quelconque traitement ; cette dureté exprimait le degré TH initial de l'eau : il était de 30° TH.

Afin de constituer une référence, un essai témoin a été réalisé qui consistait à faire subir à l'eau industrielle un traitement par ébullition en l'absence de tout agent de traitement des eaux, selon le mode opératoire précité. On mesurait alors sur le filtrat, après séparation du précipité, la dureté de l'essai témoin après l'ébullition, s'exprimant par le degré TH final témoin.

L'efficacité de chaque agent de traitement utilisé dans essais 1 à 5 était alors calculée au moyen de la formule suivante exprimée en pourcentage :

$$\%\ \text{efficacité} = \frac{\begin{pmatrix}\text{°TH final après}\\ \text{ébullition avec}\\ \text{agent traitement}\end{pmatrix} - \begin{pmatrix}\text{°TH final après}\\ \text{ébullition sans}\\ \text{agent traitement}\end{pmatrix}}{\begin{pmatrix}\text{°TH initial eau}\\ \text{avant ébullition}\end{pmatrix} - \begin{pmatrix}\text{°TH final après}\\ \text{ébullition sans}\\ \text{agent traitement}\end{pmatrix}} \times 100$$

Les résultats acquis lors des essais avec les divers agents de traitement de l'eau ainsi que l'essai témoin sont consignés dans le tableau suivant :

Tableau 2

| Agent de traitement | Degré TH final après 30 minutes à l'ébullition | % efficacité |
|---|---|---|
| Absence agent (témoin) | 7,04 | 0 |
| Essai 7 | 12,50 | 23,9 |
| Essai 8 | 14,25 | 30.9 |
| Essai 9 (invention) | 15,86 | 38,0 |

Ainsi, comme le révèle ce tableau, le terpolymère selon l'invention offre, comme agent de traitement des eaux, l'efficacité la plus forte, par comparaison avec les agents de traitement de l'art antérieur, parce que maintenant plus longtemps en solution les sels alcalino-terreux.

## Exemple 5

Cet exemple a pour but de révéler l'influence particulièrement bénéfique du terpolymère selon

l'invention sur le maintien en solution de l'ion $PO_4^{3-}$ en présence de fortes quantités de calcium selon des conditions pour lesquelles la précipitation des phosphates de calcium est quasiment totale.

Les essais réalisés à cette intention l'ont été par comparaison avec des acides polyacryliques appartenant à l'art antérieur, ayant tous la réputation d'être de médiocres inhibiteurs de la précipitation des phosphates de calcium et constituant ainsi l'environnement le plus proche du terpolymère selon l'invention.

L'essai 10 concerne un essai témoin, ne comportant aucun polymère.

L'essai 11 fait usage d'un acide polyacrylique appartenant à l'art antérieur de poids moléculaire moyen égal à 1 800.

L'essai 12 fait usage d'un acide polyacrylique appartenant également à l'art antérieur, de poids moléculaire moyen égal à 800.

L'essai 13, concerne le terpolymère selon l'invention, agent hydrosoluble de complexation de poids moléculaire moyen égal à 900.

Pour chacun de ces essais, la demanderesse a préparé, à partir d'eau bipermutée, deux litres d'une solution aqueuse contenant :

260 mg/l de $Ca^{2+}$ (provenant de $CaCl_2$, $2H_2O$), donnant un degré TH de 65 exprimé en degrés français.

20 mg/l de $PO_4^{3-}$ provenant de $H_3PO_4$

20 mg/l d'inhibiteur de précipitation des phosphates de calcium.

La solution précitée était ensuite soumise à un balayage d'azote pour éliminer le $CO_2$ et portée à la température de 60 °C dans une enceinte maintenue sous cette même atmosphère d'azote pendant un temps de 60 minutes.

Puis le pH de cette solution chaude était porté à 8,5 par introduction d'une solution normale de NaOH.

La correction du pH constituant le temps 0, on a prélevé ensuite aux temps 5, 30 et 60 minutes un volume de 25 millilitres qui a été immédiatement filtré puis refroidi à la température ambiante.

Le pourcentage d'ions phosphates restant en solution après ce traitement est mesuré par la méthode colorimétrique NF T 90-023 (septembre 1963) bien connue de l'homme de l'art.

Les résultats ont été consignés dans le tableau 3 ci-après :

Tableau 3

| | | % de $PO_4^{3-}$ restant en solution au temps : 5 min | 30 min | 60 min |
|---|---|---|---|---|
| Essai 10 | Témoin | 30 | 20 | 23 |
| Essai 11 | P.A. : 1 800 | 35 | 45 | 45 |
| Essai 12 | P.A. : 800 | 70 | 80 | 85 |
| Essai 13 | Terpolymère selon l'invention | 100 | 100 | 100 |

Ainsi, ce tableau révèle l'influence particulièrement bénéfique du terpolymère selon l'invention sur le maintien en solution des phosphates de calcium.

Exemple 6

Cet exemple illustre l'efficacité du terpolymère selon l'invention quand il est utilisé dans le traitement de l'eau de mer comme agent inhibiteur d'incrustations et de précipitation, et ce, par comparaison avec des agents appartenant à l'art antérieur et réputés posséder ces propriétés.

Pour ce faire, on a d'abord effectué un essai de laboratoire qui consistait à traiter une eau de mer naturelle (Méditerranée : Toulon) au moyen de 5 ppm d'agent antitartre à l'état sec.

Un volume de 500 ml de cette eau a été introduit dans un ballon de 1 litre surmonté d'un réfrigérant à reflux et muni d'un système permettant le prélèvement d'échantillons.

Ce volume a été porté à l'ébullition à l'aide d'un chauffe ballon équipé d'un « Simmerstat » réglé d'une manière telle que le début de l'ébullition soit obtenu en 8 minutes.

Puis, l'état d'ébullition a été maintenu pendant une heure. Le début de l'ébullition constituait le temps 0. Puis des prélèvements étaient effectués aux temps 0, 10, 30, 40, 50 et 60 minutes.

Chaque échantillon était ensuite filtré à chaud sur filtre « Millipore » de diamètre égal à 0,45 µm.

On a mesuré sur chaque filtrat le titre alcalimétrique complet (T.A.C.). Puis on a réuni dans le tableau 4 les chutes de T.A.C. par rapport au T.A.C. initial, qui était de 12,5, que l'on a noté Δ T.A.C. enregistré en fonction du temps.

L'essai 14 concerne un essai témoin ne comportant aucun polymère.

L'essai 15 fait usage d'un acide polyacrylique appartenant à l'art antérieur de poids moléculaire moyen 2 000.

L'essai 16 concerne un acide polyacrylique appartenant à l'art antérieur, de poids moléculaire moyen 800.

L'essai 17 met en œuvre un acide polymaléique de bas poids moléculaire moyen (de l'ordre de 600 à 800) couramment utilisé dans les unités de dessalement de l'eau de mer.

L'essai 18 concerne le terpolymère selon l'invention de poids moléculaire moyen égal à 900.

Tableau 4

| Temps en min | Δ T.A.C. en degré mesuré par rapport au temps 0<br>ESSAI 14 Témoin | ESSAI 15 P.M. moyen 2 000 | ESSAI 16 P.M. moyen 800 | ESSAI 17 acide polymaléique | ESSAI 18 terpolymère invention |
|---|---|---|---|---|---|
| 0 | 0 | 0 | 0 | 0 | 0 |
| 10 | 0,25 | 0 | 0 | 0 | 0 |
| 20 | 1,50 | 0,28 | 0,25 | 0 | 0 |
| 30 | 7,5 | 1,85 | 1,75 | 0 | 0,20 |
| 40 | Arrêt des mesures | 6,5 | 5,5 | 1,00 | 0,60 |
| 50 | | Arrêt des mesures | Arrêt des mesures | 3,00 | 3,00 |
| 60 | | | | 5,50 | 6,50 |

Ainsi, le tableau révèle que le terpolymère selon l'invention est très efficace dans le traitement de l'eau de mer, car il se révèle être aussi performant que le meilleur des agents actuellement connu pour ce type de traitement (acide polymaléique).

Le résultat de laboratoire se manifestant d'une manière très positive, un essai dudit terpolymère selon l'invention a été effectué industriellement dans un condenso-évaporateur produisant de l'eau douce par ébullition d'eau de mer à l'extérieur des tubes d'un faisceau à tubes horizontal noyé dans une nappe d'eau de mer.

La température d'évaporation de la nappe d'eau était de 70 °C à 72 °C.

Le terpolymère selon l'invention était introduit dans la nappe d'eau à raison de 6 ppm. On notait le coefficient d'échange thermique de l'installation au temps $T_0$.

Dans le cas où la nappe d'eau de mer était traitée par le terpolymère selon l'invention, le coefficient d'échange thermique de l'installation après 300 heures de fonctionnement avait diminué de 25 % environ et s'était stabilisé à ce niveau.

Dans le cas où la nappe d'eau de mer était exempte du terpolymère selon l'invention, le coefficient thermique de l'installation avait diminué de 60 % environ après 40 heures de fonctionnement, rendant ladite installation inexploitable et obligeant à un traitement de détartrage au moyen d'un acide fort avant tout nouvel usage.

Ainsi, le terpolymère selon l'invention se révèle être particulièrement performant comme agent antitartre ajouté à l'eau de mer en vue de sa distillation.

## Exemple 7

Cet exemple a pour but de comparer l'action anticorrodante du terpolymère selon l'invention avec celle d'un acide polyacrylique de même poids moléculaire appartenant à l'art antérieur et constituant l'environnement le plus proche, à partir de compositions aqueuses contenant un sel de zinc, de l'acide phosphorique et le polymère.

Pour ce faire, des plaquettes en acier doux, préalablement décapées, disposant d'une surface totale (recto et verso) de 1 décimètre carré ont été placées dans des béchers contenant chacun 2 litres d'eau industrielle.

Le premier essai (Essai n° 19) pratiquait l'immersion des plaquettes dans l'eau industrielle ne contenant aucun adjuvant. Cet essai constituait le témoin.

Le deuxième essai (Essai n° 20) pratiquait l'immersion des plaquettes dans la même eau industrielle, dans laquelle avaient été introduit :

| | |
|---|---|
| acide polyacrylique de poids moléculaire moyen 1 200, constituant l'art antérieur : | 6 ppm |
| chlorure de zinc : | 7 ppm |
| $H_3PO_4$ : | 5 ppm |

Le dernier essai (Essai n° 21) pratiquait l'immersion des plaquettes dans la même eau industrielle dans laquelle avaient été introduits :

| | |
|---|---|
| terpolymère selon l'invention de poids moléculaire moyen égal à 900 : | 6 ppm |
| chlorure de zinc : | 7 ppm |
| $H_3PO_4$ : | 5 ppm |

Pour chacun de ces essais, la Demanderesse a utilisé de l'eau industrielle de même origine dont la teneur en sels alcalino-terreux et plus particulièrement en calcium était mesurée par formation des complexes des ions $Ca^{2-}$, au moyen d'une solution titrée de sel disodique de l'acide éthylène diamine tétraacétique, en milieu tamponné à pH 10, en donnant la valeur d'une dureté en degré français TH (norme AFNOR NF-T 90 003).

Pour mesurer l'efficacité anticorrodante de l'agent de traitement, qu'il appartienne à l'art antérieur ou qu'il émane de l'invention, la Demanderesse a tout d'abord effectué la mesure de la dureté de l'eau industrielle avant qu'elle soit soumise à un quelconque traitement ; cette dureté exprimait le degré TH initial de l'eau : il était de 12° TH.

Chaque essai a été réalisé selon le même mode opératoire qui consistait à maintenir les plaquettes immergées dans les deux litres d'eau industrielle, additivée ou non, en état d'agitation lente au moyen d'un agitateur magnétique et à une température constante de 20 °C, pendant 72 heures.

Le taux de corrosion était alors mesuré par la perte de poids des plaquettes d'acier doux, traduisant une perte d'épaisseur s'exprimant en µm par année d'immersion.

Les résultats ont été consignés dans le tableau 5 ci-après :

Tableau 5

| | | Corrosion en µm par année |
|---|---|---|
| Essai n° 19 | Témoin, exempt d'adjuvant | 295 |
| Essai n° 20 | Acide polyacrylique (art antérieur) | 70 |
| Essai n°21 | Terpolymère (invention) | 25 |

Ainsi, comme le révèle ce tableau, l'agent complexant selon l'invention offre les résultats les meilleurs en matière d'inhibition de la corrosion, car cet agent manifeste une plus grande efficacité pour maintenir en solution les inhibiteurs de corrosion constitués par le zinc et l'ion phosphate.

## Exemple 8

Cet exemple a pour but d'illustrer l'efficacité du terpolymère selon l'invention dans l'application de l'ultrafiltration à la récupération de cations métalliques.

Un tel procédé consiste à forcer le passage d'un milieu aqueux contenant les cations par application d'une surpression de quelques bars à travers une membrane semi-perméable possédant une microstructure suffisamment fine.

Ce procédé conduit à la récupération d'un « ultrafiltrat » débarrassé des cations, qui se trouvent concentrés dans le « rétentat ».

Les membranes industrielles, utilisées dans l'application de l'ultrafiltration, ont des pores dont la dimension varie de 2 à 300 nm. Ces pores laissent passer tous les poids moléculaires inférieurs à 15 000, exprimés en protéines en milieu tamponné à pH 7. Dès lors, de telles membranes laissent passer les cations lorsqu'ils sont seuls en solution aqueuse sous une forme ionique.

L'ajout du terpolymère selon l'invention à une solution aqueuse de cations, entraîne la formation de complexes assez volumineux pour être retenus par la membrane, permettant ainsi la récupération d'un « rétentat » très riche en cations et d'un « ultrafiltrat » pratiquement débarrassé desdits cations.

En pratique, on a préparé 5 litres d'une solution aqueuse contenant des cations cuivriques. Puis on a ultrafiltré 1 litre de cette solution sur un module plan du commerce (Sartorius SM 165-25) ayant une surface active de 169 $cm^2$ et équipé d'une membrane Sartorius SM 113-11 en nitrate de cellulose de diamètre de pore de 10 nm.

Le débit du fluide était de 2 litres/heure environ et la pression appliquée de 1 bar.

Dans l'essai n° 22, la solution contenait 500 milligrammes d'ions cuivriques mis sous forme de sulfate.

Dans l'essai n° 23, la solution contenait 500 milligrammes d'ions cuivriques mis sous forme de sulfate et 5 grammes sec de terpolymère selon l'invention décrit dans l'exemple n° 1.

Les résultats obtenus ont été consignés dans le tableau 6 ci-après

Tableau 6

| | | Quantité de cuivre ayant traversé la membrane avec l'ultrafiltrant |
|---|---|---|
| Essai n° 22 | témoin | 93 mg |
| Essai n° 23 | avec le terpolymère selon l'invention | 0,3 mg |

Il a pu, dès lors, être constaté la grande efficacité de l'agent complexant selon l'invention quand il est utilisé en ultrafiltration.

**Revendications**

1. Agent hydrosoluble de complexation des cations métalliques disposant d'un haut pouvoir complexant et d'un effet de seuil élevé, constitué de copolymères acryliques, caractérisé en ce que ledit agent est formé des terpolymères comprenant des motifs acryliques et méthacryliques et itaconiques, de formule générale :

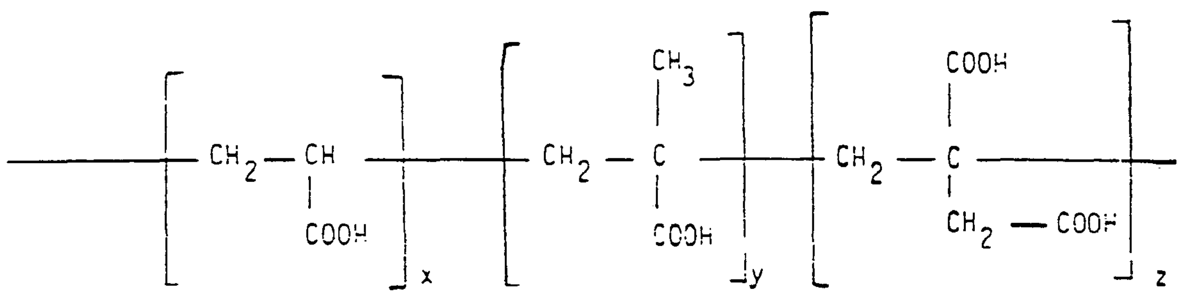

dans laquelle les indices, exprimés en pourcent en poids, ont au moins une valeur de 10 pour x et y et une valeur de 5 pour z.

2. Agent hydrosoluble de complexation des cations métalliques selon la revendication 1, caractérisé en ce que les terpolymères constituant ledit agent contiennent en pourcent en poids de 20 à 60 % d'acide acrylique, de 20 à 60 % d'acide méthacrylique et de 5 à 40 % d'acide itaconique.

3. Agent hydrosoluble de complexation des cations métalliques selon les revendications 1 ou 2 caractérisé en ce que les terpolymères constituant ledit agent contiennent préférentiellement en pourcent en poids de 30 à 50 % d'acide acrylique, de 30 à 50 % d'acide méthacrylique, et de 10 à 30 % d'acide itaconique.

4. Agent hydrosoluble de complexation des cations métalliques selon l'une quelconque des revendications 1 à 3 caractérisé en ce que les terpolymères constituant ledit agent sont partiellement neutralisés.

5. Agent hydrosoluble de complexation des cations métalliques selon l'une quelconque des revendications 1 à 3 caractérisé en ce que les terpolymères constituant ledit agent sont totalement neutralisés.

6. Agent hydrosoluble de complexation des cations métalliques selon l'une quelconque des revendications 1 à 5 caractérisé en ce que les terpolymères sont neutralisés par au moins un agent de neutralisation disposant d'une fonction monovalente ou d'une fonction polyvalente.

7. Agent hydrosoluble de complexation des cations métalliques selon l'une quelconque des revendications 1 à 6 caractérisé en ce que les terpolymères sont neutralisés par des combinaisons entre au moins un agent de neutralisation disposant d'une fonction monovalente et au moins un agent de neutralisation disposant d'une fonction polyvalente.

8. Agent hydrosoluble de complexation des cations métalliques selon l'une quelconque des revendications 6 et 7 caractérisé en ce que l'agent de neutralisation disposant d'une fonction monovalente est choisi dans le groupe constitué par les cations alcalins, préférentiellement le sodium, le

potassium et l'ammonium, ainsi que par les amines primaires, secondaires ou tertiaires aliphatiques et/ou cycliques, préférentiellement les éthanolamines, la mono et diéthylamine, la cyclohexylamine et la méthylcyclohexylamine.

9. Agent de complexation des cations selon l'une quelconque des revendications 6 et 7 caractérisé en ce que l'agent de neutralisation disposant d'une fonction polyvalente est choisi dans le groupe constitué par les cations divalents alcalino-terreux, préférentiellement le calcium, le magnésium, le zinc, par les cations trivalents préférentiellement l'aluminium et par les polyamines aliphatiques et/ou cycliques, préférentiellement l'éthylènediamine et la diéthylènetriamine.

10. Agent hydrosoluble de complexation des cations métalliques selon l'une quelconque des revendications 1 à 9 caractérisé en ce que les terpolymères constituant ledit agent ont des poids moléculaires distribués entre 500 et 100 000 et un poids moléculaire moyen compris entre 700 et 50 000.

11. Agent hydrosoluble de complexation des cations métalliques selon l'une quelconque des revendications 1 à 10 caractérisé en ce que les terpolymères ont un poids moléculaire moyen compris préférentiellement entre 700 et 1 500 quand il est mis en œuvre dans le traitement des eaux industrielles et/ou domestiques.

12. Agent hydrosoluble de complexation des cations métalliques selon l'une quelconque des revendications 1 à 10 caractérisé en ce que les terpolymères ont un poids moléculaire moyen compris entre 1 000 et 50 000 et préférentiellement entre 2 000 et 50 000 quand il est mis en œuvre dans le domaine de l'osmose inverse et de l'ultrafiltration.

13. Agent hydrosoluble de complexation des cations métalliques selon l'une quelconque des revendications 1 à 12 caractérisé en ce que ledit agent formé des terpolymères est en solution aqueuse.

14. Agent hydrosoluble de complexation des cations métalliques selon l'une quelconque des revendications 1 à 12 caractérisé en ce que ledit agent, formé des terpolymères se présente sous forme de poudre.

15. Procédé de traitement des eaux et des milieux aqueux en vue d'empêcher la formation d'incrustations minérales, de précipitation, de corrosion, caractérisé en ce que, selon l'une quelconque des revendications 1 à 14, l'agent hydrosoluble de complexation des cations métalliques est introduit dans lesdits milieux aqueux à raison de 1 à 100 ppm et de préférence à raison de 2 à 10 ppm.

16. Procédé de concentration par osmose inverse ou ultrafiltration de milieux aqueux contenant des cations métalliques en solution caractérisé en ce que selon l'une quelconque des revendications 1 à 14, l'agent hydrosoluble de complexation des cations métalliques est introduit dans lesdits milieux à raison d'au moins la quantité stœchiométrique nécessaire à la complexation.

## Claims

1. Water-soluble complexing agent for metallic cations, having a high complexing power and a high threshold effect, composed of acrylic copolymers, characterised in that the said agent is formed from terpolymers, comprising acrylic and methacrylic and itaconic units of the general formula :

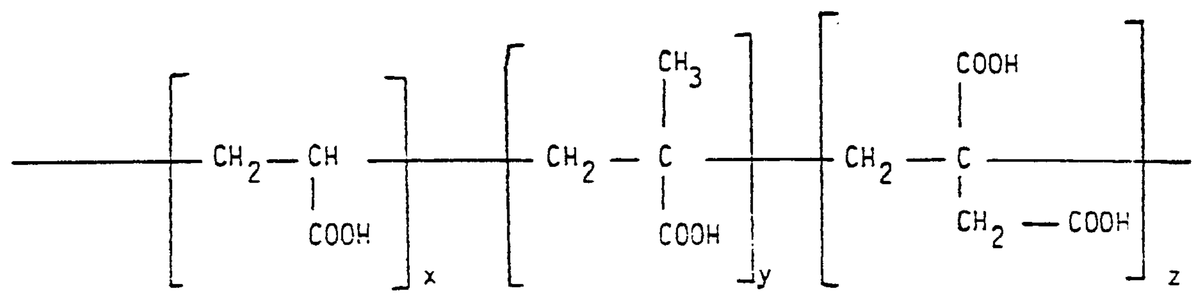

in which the indices, expressed in percentage by weight, have at least a value of 10 for x and y and a value of 5 for z.

2. Water-soluble complexing for metallic cations according to Claim 1, characterised in that the terpolymers constituting the said agent contain, in percentage by weight, from 20 to 60 % acrylic acid, from 20 to 60 % methacrylic acid and from 5 to 40 % itaconic acid.

3. Water-soluble complexing agent for metallic cations according to Claims 1 or 2, characterised in that the terpolymers constituting the said agent preferably contain, in percentage by weight, from 30 to 50 % acrylic acid, from 30 to 50 % methacrylic acid and from 10 to 30 % itaconic acid.

4. Water-soluble complexing agent for metallic cations according to any one of Claims 1 to 3, characterised in that the terpolymers constituting the said agent are partially neutralised.

5. Water-soluble complexing agent for metallic cations according to any one of Claims 1 to 3, characterised in that the terpolymers constituting the said agent are completely neutralised.

6. Water-soluble complexing agent for metallic cations according to any one of Claims 1 to 5,

characterised in that the terpolymers are neutralised by at least one neutralising agent having a monovalent function or a polyvalent function.

7. Water-soluble complexing agent for metallic cations according to any one of Claims 1 to 6, characterised in that the terpolymers are neutralised by combinations between at least one neutralising agent having a monovalent function and at least one neutralising agent having a polyvalent function.

8. Water-soluble complexing agent for metallic cations according to any one of Claims 6 and 7, characterised in that the neutralising agent having a monovalent function is selected from the group consisting of the alkaline cations, preferably sodium, potassium and ammonium, and also of the primary, secondary or tertiary aliphatic and/or cyclic amines, preferably the ethanolamines, mono- and diethylamine, cyclohexylamine and methylcyclohexylamine.

9. Complexing agent for metallic cations according to any one of Claims 6 and 7, characterised in that the neutralising agent having a polyvalent function is selected from the group consisting of the divalent alkaline earth cations, preferably calcium, magnesium, zinc, of the trivalent cations, preferably aluminium, and of the aliphatic and/or cyclic polyamines, preferably ethylenediamine and diethylenetriamine.

10. Water-soluble complexing agent for metallic cations according to any one of Claims 1 to 9, characterised in that the terpolymers constituting the said agent have molecular weights distributed between 500 and 100 000 and a mean molecular weight of between 700 and 50 000.

11. Water-soluble complexing agent for metallic cations according to any one of Claims 1 to 10, characterised in that the terpolymers have a mean molecular weight preferably of between 700 and 1 500 when it is used in the treatment of industrial and/or domestic water.

12. Water-soluble complexing agent for metallic cations according to any one of Claims 1 to 10, characterised in that the terpolymers have a mean molecular weight of between 1 000 and 50 000 and preferably between 2 000 and 50 000 when it is used in the field of inverse osmosis and of ultra-filtration.

13. Water-soluble complexing agent for metallic cations according to any one of Claims 1 to 12, characterised in that the said agent formed from terpolymers is in aqueous solution.

14. Water-soluble complexing agent for metallic cations according to any one of Claims 1 to 12, characterised in that the said agent, formed from terpolymers occurs in powder form.

15. Process for the treatment of water and of aqueous media with a view to preventing the formation of mineral incrustations, precipitation, corrosion, characterised in that the water-soluble complexing agent for metallic cations according to any one of Claims 1 to 14, is introduced into the said aqueous media at the rate of 1 to 100 ppm and preferably at the rate of 2 to 10 ppm.

16. Process of concentration by inverse osmosis or ultra-filtration of aqueous media containing metallic cations in solution characterised in that the water-soluble complexing agent for metallic cations according to any one of Claims 1 to 14 is introduced into the said media at a rate of at least the stoichiometric quantity necessary for complexing.

**Patentansprüche**

1. Wasserlösliches Komplexierungsmittel für Metallkationen mit einem hohen Komplexbildungsvermögen und einem hohen Schwelleneffekt, das aus Acrylcopolymeren aufgebaut ist, dadurch gekennzeichnet, daß das Mittel aus Terpolymeren besteht, die Acryl-, Methacryl- und Itaconeinheiten der allgemeinen Formel enthalten :

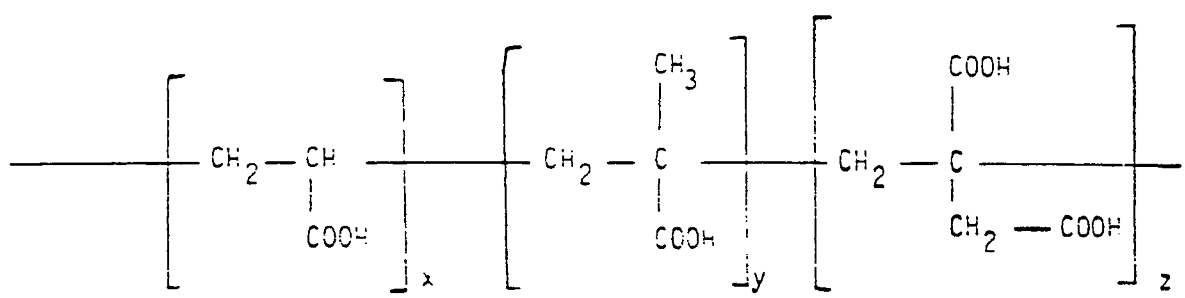

in der die Indices, ausgedrückt in Gewichtsprozent, mindestens einen Wert von 10 für x und y und einen Wert von 5 für z besitzen.

2. Wasserlösliches Komplexierungsmittel für Metallkationen nach Anspruch 1, dadurch gekennzeichnet, daß die Terpolymeren, aus denen das Komplexierungsmittel besteht, 20 bis 60 Gew.% Acrylsäure, 20 bis 60 Gew.% Methacrylsäure und 5 bis 40 Gew.% Itaconsäure enthalten.

3. Wasserlösliches Komplexierungsmittel für Metallkationen nach Anspruch 1 oder 2, dadurch gekennzeichnet, daß die Terpolymeren, aus denen das Komplexierungsmittel besteht, vorzugsweise 30 bis 50 Gew.% Acrylsäure, 30 bis 50 Gew.% Methacrylsäure und 10 bis 30 Gew.% Itaconsäure enthalten.

4. Wasserlösliches Komplexierungsmittel für Metallkationen nach einem der Ansprüche 1 bis 3,

dadurch gekennzeichnet, daß die Terpolymeren, aus denen das Mittel besteht, teilweise neutralisiert sind.

5. Wasserlösliches Komplexierungsmittel für Metallkationen nach einem der Ansprüche 1 bis 3, dadurch gekennzeichnet, daß die Terpolymeren, aus denen das Mittel besteht, vollständig neutralisiert sind.

6. Wasserlösliches Komplexierungsmittel für Metallkationen nach einem der Ansprüche 1 bis 5, dadurch gekennzeichnet, daß die Terpolymeren mittels eines Neutralisationsmittels neutralisiert sind, das über eine monovalente oder eine polyvalente Funktion verfügt.

7. Wasserlösliches Komplexierungsmittel für Metallkationen nach einem der Ansprüche 1 bis 6, dadurch gekennzeichnet, daß die Terpolymeren durch Kombinationen zwischen mindestens einem Neutralisationsmittel mit einer monovalenten Funktion und mindestens einem Neutralisationsmittel mit einer polyvalenten Funktion neutralisiert werden.

8. Wasserlösliches Komplexierungsmittel für Metallkationen nach Anspruch 6 oder 7, dadurch gekennzeichnet, daß das Neutralisationsmittel mit einer monovalenten Funktion ausgewählt wird aus der Gruppe der Alkalikationen, vorzugsweise dem Natrium, dem Kalium und dem Ammonium, sowie der primären, sekundären oder tertiären aliphatischen und/oder cyclischen Amine, vorzugsweise den Äthanolaminen, dem Mono- und Diethylamin, dem Cyclohexylamin und dem Methylcyclohexylamin.

9. Komplexierungsmittel für Metallkationen nach Anspruch 6 oder 7, dadurch gekennzeichnet, daß das Neutralisationsmittel mit einer polyvalenten Funktion ausgewählt wird aus der Gruppe der zweiwertigen Erdalkalikationen,vorzugsweise dem Calcium, Magnesium und Zink, den dreiwertigen Kationen, vorzugsweise dem Aluminium, und den aliphatischen und/oder cyclischen Polyaminen, vorzugsweise dem Ethylendiamin und dem Diethylentriamin.

10. Wasserlösliches Komplexierungsmittel für Metallkationen nach einem der Ansprüche 1 bis 9, dadurch gekennzeichnet, daß die Terpolymere, aus denen das Mittel besteht, Molekulargewichte verteilt zwischen 500 und 100 000 und ein mitteleres Molekulargewicht zwischen 700 und 50 000 besitzen.

11. Wasserlösliches Komplexierungsmittel für Metallkationen nach einem der Ansprüche 1 bis 10, dadurch gekennzeichnet, daß die Terpolymeren ein mittleres Molekulargewicht von vorzugsweise zwischen 700 und 1 500 besitzen, wenn das Komplexierungsmittel zur Behandlung von industriellen und/oder Haushaltswässern eingesetzt wird.

12. Wasserlösliches Komplexierungsmittel für Metallkationen nach einem der Ansprüche 1 bis 10, dadurch gekennzeichnet, daß die Terpolymeren ein mittleres Molekulargewicht zwischen 1 000 und 50 000, vorzugsweise zwischen 2 000 und 50 000, besitzen, wenn das Mittel auf dem Gebiet der inversen Osmose und der Ultrafiltration eingesetzt wird.

13. Wasserlösliches Komplexierungsmittel für Metallkationen nach einem der Ansprüche 1 bis 12, dadurch gekennzeichnet, daß das aus Terpolymeren bestehende Mittel in wässriger Lösung vorliegt.

14. Wasserlösliches Komplexierungsmittel für Metallkationen nach einem der Ansprüche 1 bis 12, dadurch gekennzeichnet, daß das aus Terpolymeren bestehende Mittel in Pulverform vorliegt.

15. Verfahren zur Behandlung von Wasser und wässrigen Medien zur Verhinderung der Bildung von mineralischen Ablagerungen, Ausfällungen und Korrosion, dadurch gekennzeichnet, daß das wasserlösliche Komplexierungsmittel für Metallkationen nach einem der Ansprüche 1 bis 14 in einer Menge von 1 bis 100 ppm, vorzugsweise 2 bis 10 ppm, in die genannten wässrigen Medien eingestzt wird.

16. Verfahren zur Konzentration durch inverse Osmose oder Ultrafiltration von wässrigen Medien, die metallische Kationen in Lösung enthalten, dadurch gekennzeichnet, daß das wasserlösliche Komplexierungsmittel für Metallkationen nach einem der Ansprüche 1 bis 14 in mindestens der für die Komplexierung erforderlichen stöchiometrischen Menge in die genannten Medien eingesetzt wird.